(19) Europäisches Patentamt
European Patent Office
Office européen des brevets

(11) **EP 3 128 363 B1**

(12) **EUROPEAN PATENT SPECIFICATION**

(45) Date of publication and mention of the grant of the patent:
**19.12.2018 Bulletin 2018/51**

(51) Int Cl.:
***G02F 1/09*** *(2006.01)*  ***H01S 3/00*** *(2006.01)*

(21) Application number: **16150562.3**

(22) Date of filing: **08.01.2016**

(54) **AN OPTICAL ISOLATOR, A LASER OUTPUT HEAD AND A LASER DEVICE**

OPTISCHER ISOLATOR, LASERAUSGABEKOPF UND LASERVORRICHTUNG

ISOLATEUR OPTIQUE, TÊTE DE SORTIE LASER ET DISPOSITIF LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2015 CN 201510477746**

(43) Date of publication of application:
**08.02.2017 Bulletin 2017/06**

(73) Proprietor: **Maxphotonics Corporation Guangdong 518103 (CN)**

(72) Inventors:
 • **Zhang, Haotai**
  **518103 Shenzhen (CN)**
 • **Ju, Jian**
  **518103 Shenzhen (CN)**
 • **Li, Liancheng**
  **518103 Shenzhen (CN)**
 • **Jiang, Feng**
  **518103 Shenzhen (CN)**

(74) Representative: **Dennemeyer & Associates S.A.**
 **Landaubogen 1-3**
 **81373 München (DE)**

(56) References cited:
 **JP-A- H0 862 646**  **JP-A- S59 181 319**
 **JP-A- 2004 077 617**

## Description

This application is based upon and claims priority to Chinese Patent Application No.CN201510477746.6, filed August 6, 2015.

## TECHNICAL FIELD

The present invention relates to the technical field of isolator, in particular to an optical isolator, a laser output head and a laser device. The features of the preamble of the independent claim are known from JP S59 181319 A. Related technology is known from JP H08 62646 A.

## BACKGROUND

Isolator is applied in a large-scale to the output port of the high power laser device, which is capable to effectively avoid the influence of returned beams returned from laser beam machined surface on the laser device. In the isolator design, usually a specific angle generated by the combination of a strong magnet and a Faraday device makes the light beam have more loss when it spreads in opposite direction, thereby achieving a high isolation.

However, when the isolator is used in different working environment temperature, the magnetic field strength of the isolator and the characteristics of the Faraday crystal change, which makes the isolation of the isolator get worse. When the operating temperature changes frequently, the isolation of the isolator becomes unstable, which seriously affects the laser output stability.

## SUMMARY

In view of the above problem, the embodiments of the present application disclose an optical isolator, a laser output head and a laser device, at least partially solve the problems above.

To solve the problem above, an embodiment of the application discloses an optical isolator, as defined in the independent claim, including: an isolator main component and a magnetic field adjusting module, wherein the center of the isolator main component is provided with a central through hole; the isolator main component includes: at least a group of magnet array, a Faraday optical rotation component and a magnetic field adjusting screw disposed in the central through hole; the magnet array is disposed around the central through hole, the magnetic field adjusting module includes: a magnetic field adjusting electric motor; the magnetic field adjusting screw is connected to the magnetic field adjusting electric motor and the magnet array, respectively, the magnetic field adjusting electric motor is configured to adjust magnetic field strength applied to the Faraday optical rotation component from the magnet array by changing the displacement of the magnetic field adjusting screw.

The application also discloses a laser output head, including: an isolator main component and a magnetic field adjusting module, wherein the center of the isolator main component is provided with a central through hole; the isolator main component includes: at least a group of magnet array, a Faraday optical rotation component and a magnetic field adjusting screw disposed in the central through hole; the magnet array is disposed around the central through hole, the magnetic field adjusting module includes: a magnetic field adjusting electric motor; the magnetic field adjusting screw is connected to the magnetic field adjusting electric motor and the magnet array, respectively, the magnetic field adjusting electric motor is configured to adjust magnetic field strength applied to the Faraday optical rotation component from the magnet array by changing the displacement of the magnetic field adjusting screw.

The application also discloses a laser device, including: an isolator main component and a magnetic field adjusting module, wherein the center of the isolator main component is provided with a central through hole; the isolator main component includes: at least a group of magnet array, a Faraday optical rotation component and a magnetic field adjusting screw disposed in the central through hole; the magnet array is disposed around the central through hole, the magnetic field adjusting module includes: a magnetic field adjusting electric motor; the magnetic field adjusting screw is connected to the magnetic field adjusting electric motor and the magnet array, respectively, the magnetic field adjusting electric motor is configured to adjust magnetic field strength applied to the Faraday optical rotation component from the magnet array by changing the displacement of the magnetic field adjusting screw.

Preferably, the magnet array comprises: a first magnet, a second magnet, and a third magnet which are arranged parallel to the central through hole;
a magnetic field direction of the first magnet is perpendicular to the central through hole;
a magnetic field direction of the second magnet is parallel to the central through hole;
a magnetic field direction of the third magnet is perpendicular to the central through hole and is opposite to the magnetic field direction of the first magnet.
the magnetic field adjusting module further comprises a magnetic field control system, the magnetic field control system is connected to the magnetic field adjusting electric motor and controls working status of the magnetic field adjusting electric motor;
the magnetic field control system comprises an electric motor driving system, microprocessor and a temperature sensor;
the electric motor driving system changes an angular displacement of the magnetic field adjusting electric motor by inputting current pulses to the magnetic field adjusting electric motor;
the electric motor driving system changes a rotation direction of the magnetic field adjusting electric motor by adjusting positive and negative directions of the current pulse;

the temperature sensor is disposed between the magnet arrays and is configured to convert temperature signals of the temperature around the Faraday optical rotation component and magnet arrays to electrical signals, and transmit the electrical signals to the magnetic field control system;

the microprocessor receives the signals detected by the temperature sensor;

the microprocessor uses the comparison of the detected temperature value and preset optimal temperature value to obtain a feedback signal;

the electric motor driving system uses the feedback signal to adjust the number and the positive and negative directions of the current pulses.

Preferably, the magnetic field control system further comprises a coil; the coil is disposed in the Faraday optical rotation component;

the coil is configured to provide auxiliary magnetic field for the Faraday optical rotation component.

Preferably, the optical isolator further includes an input collimator and an output collimator connected to both ends of the isolator main component, respectively.

Preferably, the optical isolator further includes an input collimator and a beam expansion system connected to two ends of the isolator main component, respectively.

Preferably, the Faraday optical rotation component comprises: a first beam splitter, a second beam splitter, a Faraday element and a quartz rotator;

the first beam splitter and the second beam splitter are disposed at two ends of the Faraday element, respectively;

the quartz rotator are disposed between the Faraday element and the first beam splitter or the second beam splitter.

Preferably, the Faraday optical rotation component further comprises: a first reflecting plate and a second reflecting plate disposed at two ends of the Faraday element, respectively;

the first reflecting plate and the second reflecting plate forms a reflective optical path.

Preferably, the Faraday optical rotation component further comprises: a polarizer, a polarization analyzer and a Faraday element;

the polarizer and the polarization analyzer are disposed at two ends of the Faraday element, respectively.

Preferably, the isolator main component further comprises: a conducting magnet;

the conducting magnet is connected to the magnet array;

the conducting magnet is configured to adjust magnetic direction and magnetic field strength of the position where the Faraday element is located.

Preferably, the isolator main component further comprises: a supporting column;

the supporting column adjoins the central through hole, and the Faraday optical rotation component is disposed in the supporting column.

Preferably, the temperature sensor is disposed in the supporting column.

The embodiments of the present application include advantages as follows:

In the present application, when the operating temperature of the optical isolator changes, the magnetic field strength inside the optical isolator is adjusted may be adjusted in real time through the magnetic field adjusting module, thus ensures the optical isolator remains the isolation center wavelength and isolation value under the optimal temperature when it works under various operating temperatures.

## BRIEF DESCRIPTION OF THE DRAWINGS

FIG. 1 is a variable curve diagram of magnetic field strength of the magnet under different temperatures.

FIG. 2 is a structural diagram showing an optical isolator according to an embodiment of the application;

FIG. 3 is a structural diagram showing an optical isolator with two magnet arrays;

FIG. 4 is a schematic diagram of a Faraday optical rotation component according to an embodiment of the application;

FIG. 5 is a schematic diagram of a Faraday optical rotation component according to another embodiment of the application;

FIG. 6 is a schematic diagram of a Faraday optical rotation component according to still another embodiment of the application;

FIG. 7 is a structural diagram showing an optical isolator according to an embodiment of the application;

FIG. 8 is a structural diagram showing an optical isolator according to another embodiment of the application;

FIG. 9 is a structural diagram showing an optical isolating in an embodiment of the application.

## DETAILED DESCRIPTION

In order that objectives, technical schemes and advantages of the embodiments of the disclosure become more apparent, the technical schemes in the embodiments of the disclosure will be thoroughly and completely described below in conjunction with the accompanying figures in the embodiments of the disclosure.

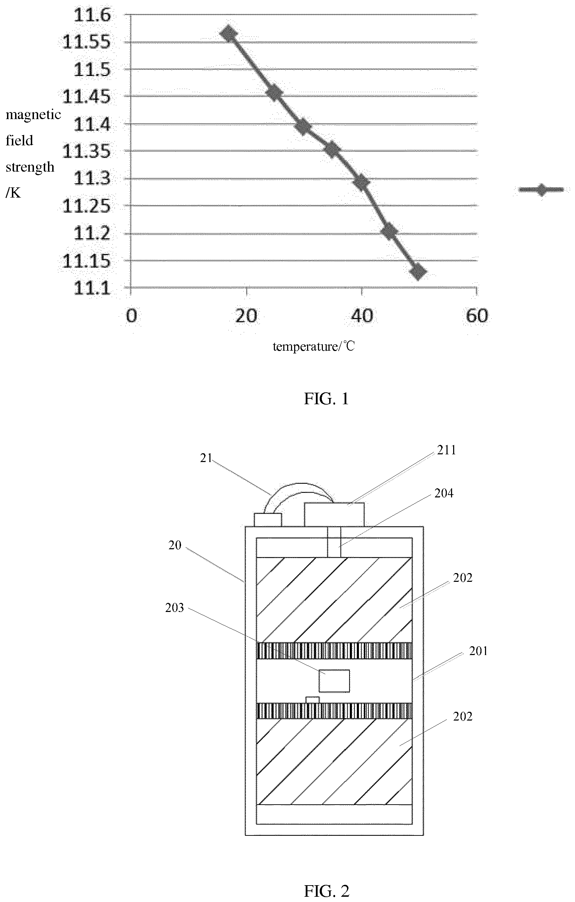

As shown in FIG. 1, it shows a variable curve graph of the magnetic field strength of magnet under different temperatures. When the temperature increases, the magnetic field strength of the magnet is weakened, and the changes of the magnetic field leads to the change of the Faraday angle, finally directly affects the isolation of the isolator.

One of the core concepts of the embodiment of the application is, by detecting the temperature inside the optical isolator through the magnetic field adjusting module, and adjusting the magnetic field strength inside the optical isolator in real time, it is ensured that the optical isolator remains the isolation center wavelength and isolation value under the optimal temperature when it works under various operating temperatures.

Referring to FIG. 2, it is a structure diagram showing an optical isolator in an embodiment of the present application, the optical isolator may specifically include: an isolator main component 20 and a magnetic field adjusting module 21. The center of the isolator main component is provided with a central through hole 201. The isolator main component includes: at least one group of magnet array 202, a Faraday optical rotation component 203 and a magnetic field adjusting screw 204. The magnet array 202 is arranged around the central through hole 201.

The magnetic field adjusting module 21 includes: a magnetic field adjusting electric motor 211. The magnetic field adjusting screw 204 is connected to the magnetic field adjusting electric motor 211 and the magnet array 202, respectively, and the magnetic field adjusting electric motor 211 is configured to adjust the magnetic field strength from the magnet array 202 to the Faraday optical rotation component 203 via changing the displacement of the magnetic field adjusting screw 204.

In the embodiment of the application, the Faraday optical rotation component 203 includes one or more Faraday crystals, and in a specific magnetic field, the Faraday crystal is capable to make optical vector direction of the light beam rotate by a certain angle. This feature is usually characterized by the following formula:

$$\theta = VBL$$

wherein, V is the Verdet constant, B is the magnetic induction intensity, L is the length of the Faraday crystal, θ is the rotating angle generated by the optical vector of the Faraday crystal with L length in the magnetic induction intensity B.

At fixed temperature, such as normal temperature, through the adjustment of the magnetic field strength, it is capable to make light beams which pass the Faraday crystal achieve the best rotation angle, that is achieve the best isolation effect. However, when the isolator is used in different working environment temperatures, the magnetic field strength of the isolator and the properties of the Faraday crystal change, thusly the isolation of the isolator gets worse.

Therefore, in the embodiment of the application, the magnetic field adjusting module is added to the optical isolator to adjust the magnetic field strength inside the isolator in real time, and calibrating the magnetic field needed by the isolator under different temperatures in a warm box in advance, thusly, according to the calibrating values of the magnetic field and the actual usage temperature, the magnetic field strength is adjusted in real time, so as to ensure that the isolator remains the isolation center wavelength and isolation value under the optimal temperature when it works under various operating temperatures, and also ensures the stable work of the laser device under each temperature.

In the magnetic field adjusting module, the magnetic field adjusting electric motor is connected to the magnetic field adjusting screw, and the magnetic field adjusting electric motor is usually a stepper motor or a servo motor. The electric motor drives the magnetic field adjusting screw to adjust to the suitable magnetic field in the case of inputting specific currents and pulses.

In an embodiment of the invention, the isolator main component further includes: a casing, an upper cover and a lower cover. Because there are strong repulsive forces among the magnet assemblies, the major role of the casing, the upper cover, and the lower cover is to fix the magnet assemblies inside the isolator main component.

As a preferred example of the embodiment of the application, the magnet array may include: a first magnet a second magnet, and a third magnet which are arranged parallel to the central through hole.

The magnetic field direction of the first magnet is perpendicular to the central through hole.

The magnetic field direction of the second magnet is parallel to the central through hole.

The magnetic field direction of the third magnet is perpendicular to the central through hole and is opposite to the magnetic field direction of the first magnet.

Specifically, the magnet array is Halbach magnet array, which enhances the field strength in the unit direction through a special arrangement of the magnet unit, and to produce the strongest magnetic field with the least amount of magnets. In the embodiment, the Halbach magnet array includes three magnets arranged in parallel with the central through hole. Wherein, the magnetic field direction of the first magnet is perpendicular to the central through hole; the magnetic field direction of the second magnet located between the first magnet and the third magnet is parallel to the central through hole; and the magnetic field direction of the third magnet is perpendicular to the central through hole and is opposite to the magnetic field direction of the first magnet.

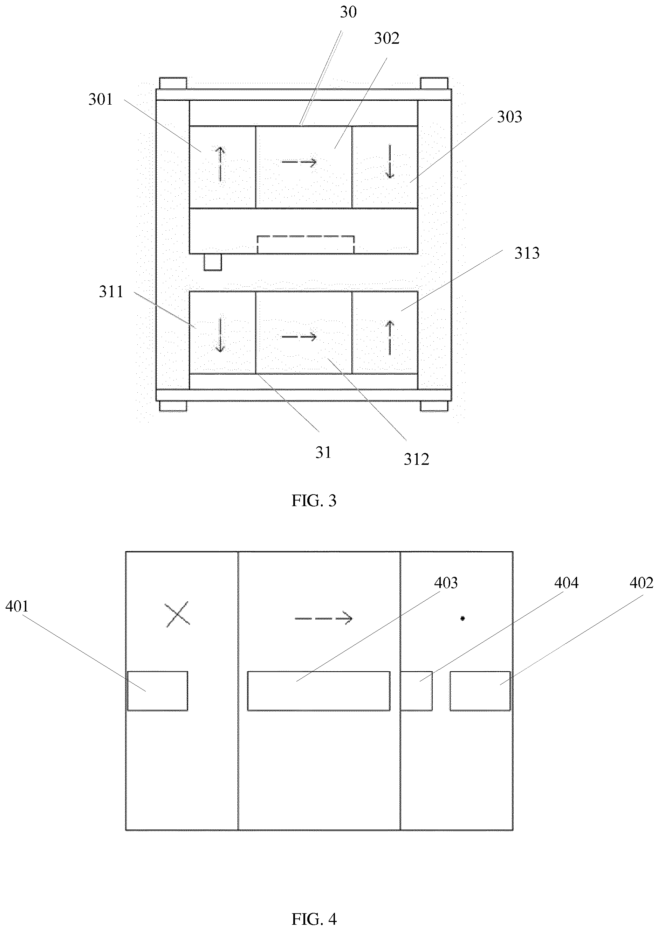

Refer to FIG. 3, it is a structural diagram showing an optical isolator with two magnet arrays, wherein, the optical isolator includes: an upper magnet array 30 and a lower magnet array 31. The upper magnet array 30 includes: an upper first magnet 301, an upper second magnet 302 and an upper third magnet 303; and the lower magnet array 31 includes: a lower first magnet 311, a lower second magnet 312 and a lower third magnet 313.

Assuming that the central through hole is disposed horizontally, then the magnetic field direction of the upper first magnet 301 is vertically upward, the magnetic field direction of the upper second magnet 302 is horizontally rightward, the magnetic field direction of the upper third magnet 303 is vertically downward, and from an overall perspective, the direction of the integrated magnetic field from the upper magnet array 30 to the Faraday optical rotation component in the central through hole is horizontally leftward. Obviously, through rotating the magnet array, it is also capable to make the direction of the integrated magnetic field applied to the Faraday optical rotation component in the central through hole horizontally rightward, and afterwards, it is also needed to adjust the quartz rotator of the Faraday optical rotation component.

The magnetic field direction of the lower first magnet 311 is vertically downward, the magnetic field direction of the lower second magnet 312 is horizontally rightward, the magnetic field direction of the lower third magnet 313 is vertically upward. The direction of the integrated magnetic field from the lower magnet array 30 to the Faraday optical rotation component in the central through hole is horizontally leftward. The magnetic field direction of the second magnet in the magnet arrays makes the direction of the integrated magnetic field horizontal, while the magnetic field direction of the first magnet and the magnetic field direction of the third magnet make the direction from the integrated magnetic field to the Faraday optical rotation component in the central through hole leftward or rightward, and the directions of the integrated magnetic fields from the upper magnet array and lower magnet array to the Faraday optical rotation component in the central through hole are the same. No matter the optical isolator includes two magnet arrays in top-bottom symmetrical distributions or a plurality of magnet arrays in symmetrical distributions, it is needed to guarantee the directions of the integrated magnetic field from each magnet array to the Faraday optical rotation component in the central through hole are the same.

As a preferred example of the embodiment of the application, the isolator main component further comprises: a conducting magnet;

the conducting magnet is connected to the magnet array; and the conducting magnet is configured to adjust magnetic field direction and magnetic field strength of the position where the Faraday element is located.

The conducting magnet itself does not have magnetism, and when these conducting magnets are put into the magnetic field, they are induced and gain magnetism. Specific magnetic lines may be formed between two conducting magnets. The magnetic reluctance of the conducting magnet is very small, and it is easy for the flux to pass, besides, the conducting magnet may control the density and direction of the flux. If it is a straight optical path, the direction of the magnetic lines is the same with the light travel direction, and if there is a reflection, according to the shape and direction of the conducting magnet, a specific position is needed to make the magnetic field in the Faraday optical rotation component strongest.

Referring to FIG. 4, it is a schematic diagram showing a Faraday optical rotation component in the embodiment of the application. In the embodiment of the application, the Faraday optical rotation component 203 includes: a first beam splitter 401, a second beam splitter 402, a Faraday element 403 and a quartz rotator 404.

The first beam splitter 401 and the second beam splitter 402 are disposed at two ends of the Faraday element 403, respectively.

The quartz rotator 404 is disposed between the Faraday element 403 and the first beam splitter 401 or between the Faraday element 403 and the second beam splitter 402.

Suppose the light beam transmits from the left to right, viewed from the in-light direction, the first beam splitter 401 splits the non-polarized light into light O and light E which are mutually perpendicular polarized lights, and the Faraday element 403 rotates the two lights by an angle of 45 degrees, then the quartz rotator 404 continues to rotate the two lights by an angle of 45 degrees. After twice rotations, both the two polarized lights are rotated by 90 degrees, eventually converging to a light in the second beam splitter 402. Viewed from the reflect-light direction, the second beam splitter 402 splits the non-polarized light into light O and light E which are mutually perpendicular polarized lights, and the Faraday element 403 rotates the two lights by an angle of -45 degrees, then the quartz rotator 404 continues to rotate the two lights by an angle of 45 degrees. After twice rotations, both the two polarized lights are rotated by 0 degree, eventually being completely separated in the second beam splitter and deviating from the central axis. Since light O and light E deviated from the central axis are not able to pass through the light through hole of the beam splitter, the function of insulating the returned light is achieved. The Faraday element is usually Terbium Gallium Garnet (TGG), magneto-optical glass and other materials. Both the Faraday element and the beam splitter are coaxial with the magnetic line, and at that moment, the magnetic line is parallel to the light beams in the Faraday element. It is capable to use glass slice or other elements to replace the quartz rotator according to actual needs.

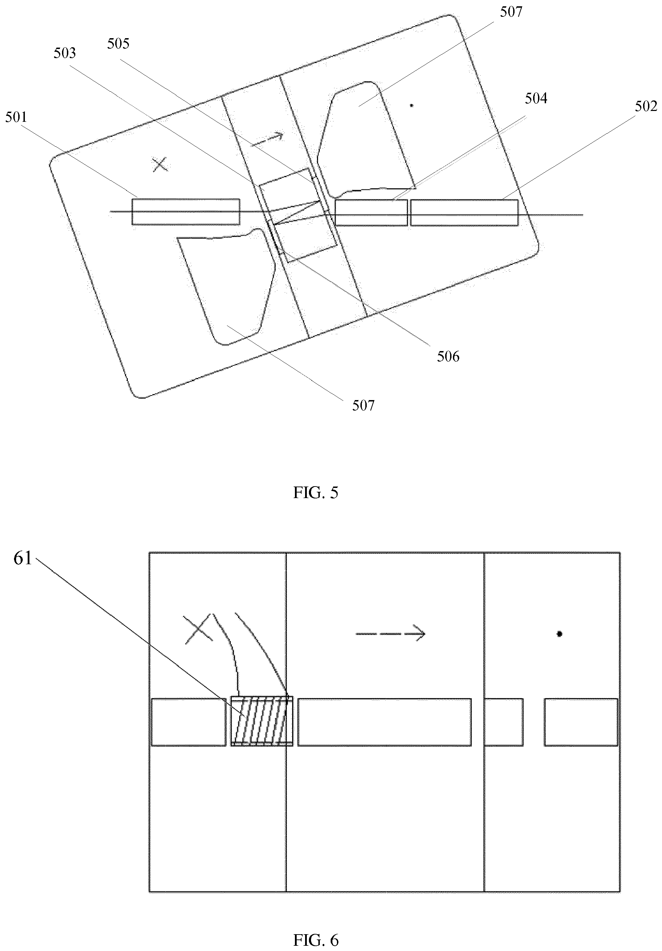

Referring to FIG. 5, it is a schematic diagram of a Faraday optical rotation component in the embodiment of the application. In the embodiment of the application, the Faraday optical rotation component 203 includes: a first beam splitter 501, a second beam splitter 502, a Faraday element 503, a quartz rotator 504, a back-end reflecting plate 505 and a front-end reflecting plate 506 disposed at two ends of the Faraday element, and a conducting magnet 507.

In order to reduce the volume of the Faraday element, it is capable to add a reflecting plate on the front surface and back surface of the Faraday element, and adjust the positions of the first beam splitter 501, the second beam splitter 502, the Faraday element 503, and the quartz rotator 504, thus making the light passing through the first beam splitter capable to be reflected back and forth by the back-end reflecting plate 505 and the front-end reflecting plate 506 of the Faraday element 503, and in the end, the light beam is reflected into the quartz rotator 503 by the front-end reflecting plate 506, then passes the quartz rotator 503 and transmits into the second beam splitter 502.

The reflecting times between the front-end reflecting plate 506 and the back-end reflecting plate 505 is determined by the angle of the Faraday element relative to the optical axis and the length of the reflecting plate. Reflecting plates may be adhered to the Faraday element by means of adhesives, light gel, and even direct coating. In order to make the magnetic lines in the Faraday element basically parallel to the transmittal path in the Faraday element, it is capable to add two conducting magnets 507 to change the directions of the magnetic lines of the magnet array, thus making the directions of the magnetic lines in the Faraday element basically the same with the light beams travel direction.

As a preferred example of the embodiment of the application, the magnetic field adjusting module further includes: a magnetic field control system;
the magnetic field control system is connected to the magnetic field adjusting electric motor, and the magnetic field control system controls the working status of the magnetic field adjusting electric motor.

Furthermore, the magnetic field control system includes: an electric motor driving system;
the electric motor driving system changes the angular displacement of the magnetic field adjusting electric motor via inputting current pulses into the magnetic field adjusting electric motor;
the electric motor driving system changes the rotating direction of the magnetic field adjusting electric motor by adjusting the positive and negative directions of the current pulse.

Furthermore, the magnetic field control system further includes: a microprocessor and a temperature sensor;
the temperature sensor is disposed between the magnet arrays and configured to convert the signal of temperature around the Faraday optical rotation component and magnet arrays to electrical signal and then transmit the electrical signal to the magnetic field control system.

The microprocessor receives the signals detected by the temperature sensor;

The microprocessor compares the detected temperature value with the preset optimal temperature value, and obtains feedback signal.
the electric motor driving system adopts the feedback signals to adjust the amount and the positive and negative directions of the current pulses.

The magnetic field control system includes a microprocessor system, an electric motor driving system and a temperature sensor. By the power cords of the magnetic field adjusting electric motor, the electric motor driving system changes the amount of the current pulses of the input current and sets the stepper angle of the magnetic field adjusting electric motor. The electric motor driving system changes the current polarity via signal line of the magnetic field adjusting electric motor, ensuring that the magnetic field adjusting screw can rotate clockwise and counterclockwise. The electric motor driving system controls the magnetic field adjusting electric motor to rotate counterclockwise, and the magnetic field adjusting screw presses the magnets tightly, reduces the distance between the two magnets, that is, the magnetic field strength increases. At that moment, the optical rotation angle of the Faraday element of the Faraday optical rotation component enlarges. On the contrary, the magnetic field adjusting electric motor rotates clockwise, and the magnetic field adjusting screw loosens the magnets, increases the distance between the two magnets, that is, the magnetic field strength decreases. At that moment, the optical rotation angle of the Faraday element of the Faraday optical rotation component decreases. Before the control starts, first setting a temperature value in the microprocessor system. Usually, the isolator is manufactured and coupled to the beset isolation in this temperature. By the cooperation between the temperature and the Faraday crystal, the spectrum curve will appear the optimized center wavelength and there is a corresponding optimized isolation value in the center wavelength.

Since the temperature change affects the magnetic field strength of the magnet array and the characteristics of the Faraday crystal, the temperature sensor is arranged among each group of the magnet array, and preferably, the temperature sensor is disposed at the position among the magnet arrays of each group and close to the Faraday optical rotation component. The temperature sensor converts the signals of temperature around the Faraday optical rotation component and the magnet assembly into electrical signals, and transmits the signals to the magnetic field control system through the signal line hole site. Usually the temperature sensor may be a thermal expansion sensor, a resistive transducer, a thermocouple sensor, an integrated temperature sensor, and in practical use, people may select a temperature sensor according to their needs.

In the design, since the quartz and the Faraday element have different Verdet constants corresponding to different wavelengths, it is capable to design the length of the quartz and the size of the Faraday element according to the center wavelength which needs to be used. Under a certain temperature, a largest isolation under the wavelength is made by the cooperation of the above size and the magnetic field. When the temperature changes, both the Verdet constant of the Faraday element and the magnetic field strength of the magnet array change. At that moment, the center wavelength corresponding to the optimal isolation will drift. In order to make the center wavelength of the optimal isolation still be the wavelength of the design, which means the Faraday crystal is still able to reach the rotation angle of the design, it is capable to adjust the magnetic field to make the temperature still able to achieve required rotation angle, that is, the center wavelength of the optimal isolation is still the wavelength of the design.

In order to ensure that the magnet is also able to reach the same technical index under other temperatures, it is needed to place the isolator in a high-low temperature box for calibration, wherein, the accuracy of the temperature of the high-low temperature box is corrected, ensuring the accuracy of the temperature of the high-low temperature box. Usually an isolator works under 10~50 degrees centigrade, thus it is capable to set the temperature in the high-low temperature box at 10 degrees centigrade, 20 degrees centigrade, 30 degrees centigrade, 40 degrees centigrade, 50 degrees centigrade. Because of changes of the temperature, the center wavelength of the isolator and the isolation value in the center wavelength correspondingly change. At that moment, setting a specific number of pulses and the direction of the currents to make the isolator keeps in the isolation center wavelength and isolation value under the optimal temperature when it works under this operating temperature.

Every temperature in the high-low temperature box corresponds to a specific number of pulses and the direction of the current, as such, it also corresponds to a temperature value of a temperature sensor. Aiming at the temperature above, it is capable to obtain the mathematical relationship among the amount of adjusting pulses, the direction of the current and the temperature data of the temperature sensor under other temperature values by using the special mathematical fitting method. The mathematical fitting method may be a polynomial fitting, an exponential fitting, and so on.

After completing the calibration for the magnetic field adjusting system of the isolator in the high-low temperature box, the isolator works at various temperatures. The microprocessor system of the magnetic field control system monitors the temperature around the magnet array and the Faraday optical rotation component in real time via the temperature sensor, and compares the difference between the current temperature and the optimal temperature. According to the difference between the temperatures, the electric motor driving system of the magnetic field control system sets specific pulses and direction of currents of the electric motor, causing the magnetic field adjusting screw to rotate clockwise or counterclockwise by a specific angle, then changes the magnetic field strength of the position of the Faraday element, making that the isolator keeps in isolation center wavelength and isolation values under the optimal temperature under this operating temperature.

Referring to FIG. 6, it is a schematic diagram showing a Faraday optical rotation component of the embodiment of the application. In the embodiment, the magnetic field control system further comprises: a coil 601.

The coil 601 is disposed in the Faraday optical rotation component.

The coil 601 is configured to provide an auxiliary magnetic field for the Faraday optical rotation component.

nent.

In addition to adjusting the magnetic field strength that the Faraday element is subject to via adjusting the distance from the magnet array to the central through hole, it is also capable to adjust the magnetic field strength which the Faraday element is subject to through setting the coil 601 on the Faraday optical rotation component.

In the embodiment of the application, the coil 601 is set at either end of the Faraday element through a coil fastener, and the direction and size of the current are adjusted via magnetic field control system. The magnetic field control system includes a microprocessor system and a coil drive system. Wherein, the coil drive system changes the direction and size of the input current of the coil 601 thus changes the size and direction of the auxiliary magnetic field through the power cords of the coil 601. When the magnetic field produced by the coil 601 and the coil fastener is the same with the magnetic field of the magnet component, the magnetic field strength is enhanced. When the magnetic field of the coil 601 and coil fastener is opposite to the magnetic field of the magnet component, the magnetic field strength is weakened.

Before the control starts, it is capable to set a temperature value in the microprocessor system in advance. Usually, under this temperature the isolator is manufactured and coupled to the optimal state of performance. For the cooperation between the temperature and the crystal, the spectrum curve of the isolation will appear a center wavelength and there is a corresponding isolation value in the center wavelength. This temperature is called the optimal temperature. In order to ensure that the magnet is also able to reach the same technical index under other temperatures, it is capable to place the isolator in a high-low temperature box for calibration. Wherein, the accuracy of the temperature of the high-low temperature box is corrected, ensuring the accuracy of the temperature of the high-low temperature box.

After completing the calibration for the magnetic field adjusting system of the isolator in the high-low temperature box, the isolator works at various temperatures, and the microprocessor system of the magnetic field control system monitors the temperature around the magnet component and the Faraday element in real time via the temperature sensor. According to the feedback temperature, a magnetic field drive system of the magnetic field control system sets specific directions and specific sizes of the currents for the coil, then generates a specific auxiliary magnetic field which compensates the main magnetic field of the magnet component in real time, maintaining the isolation center wavelength and isolation values under the optimal temperature when working under this operating temperature. Through the ways above, it is capable to ensure that the isolator keeps in the isolation center wavelength and isolation value under the optimal temperature when it works under various temperatures, also ensure that the laser device works stably at various temperatures.

As a preferred example of the embodiment of the application, the isolator main component further comprises: a supporting column;

the supporting column adjoins the central through hole, and the Faraday optical rotation component is disposed on the supporting column;

the temperature sensor is disposed in the supporting column.

In practical application, the design of the supporting column should be as thin as possible, in order to reduce the distance between the magnet arrays, thus making the magnetic field of the location of the Faraday element stronger.

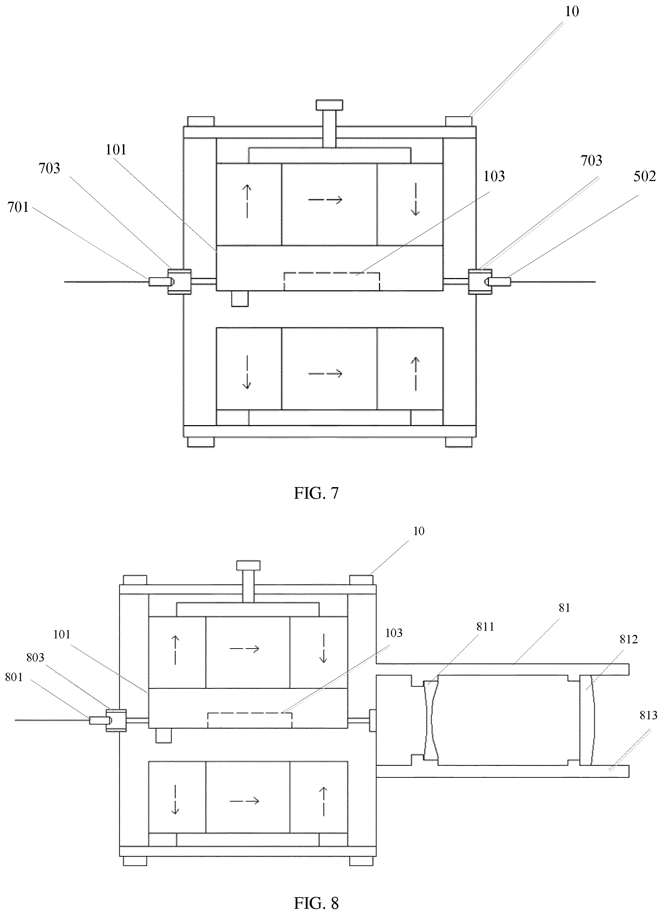

Referring to FIG. 7, it is a structural diagram showing the optical isolator in a preferred example of the embodiment of the application, wherein, the optical isolator further includes: an input collimator 701 and an output collimator 702 connected to two ends of the isolator main component, respectively.

The input collimator 701, the output collimator 702 and the isolator main component 20 form a dual collimator isolator. Collimator fasteners 703 are disposed at two ends of the isolator main component 20, and the input collimator 701 and the output collimator 702 are connected to the isolator main component 20 via the collimator fastener 703. The collimator, the collimator fastener 703, and the isolator main component 20 may be connected to each other by means of adhering, soldering, and so on.

The input collimator 701 imports the light beams of the laser device used; the output collimator 702 couples the light beams which have passed the input collimator 701 and the isolator main component 20, into the optical fibers, and finally output them to the next device. The isolator main component 20 completes various conversions of the state of polarization, and the light beam from the input collimator 701 to the output collimator 702 has a smaller insertion loss; on the contrary, the light beam from the output collimator 702 to the input collimator 701 has a larger insertion loss, that is, a higher isolation is achieved.

Referring to FIG. 8, it is a structural diagram showing the optical isolator in a preferred example of the embodiment of the application, wherein, the optical isolator further includes: an input collimator 801 and a beam expansion system 81 connected to two ends of the isolator main component 20, respectively.

A collimator fastener 803 is disposed at the left end of the isolator main component 20, and the input collimator 801 is connected to the isolator main component 20 through the collimator fastener 803. The beam expansion system 81 may concretely include: a biconcave lens 811, a planoconvex lens 812, and a lens cone 813. The beam expansion system 81 expands the light beam with a smaller diameter which has passed the isolator main component 20 into the light beam with a larger diameter, and achieves a longer distance transmission.

In order to improve the quality of the light beam, the quantity and form of the biconcave lens and the planoconvex lens are also able to be modified. The beam expansion system 81 is capable to be processed into one component with the isolator main component 20, also able to be separated into two components.

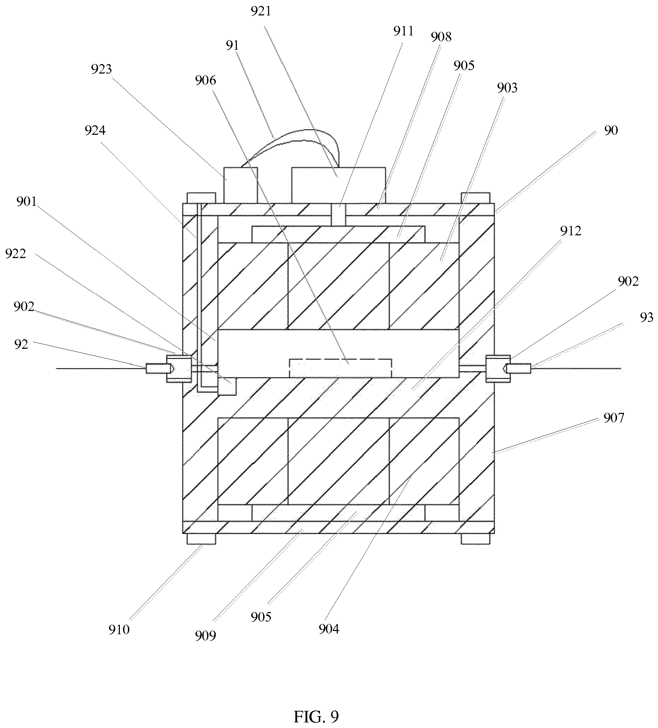

Referring to FIG. 9, it is a structural diagram showing an optical isolator in an embodiment of the application. In the embodiment of the application, the optical isolator includes: an isolator main component 90, a magnetic field adjusting module 91, an input collimator 92, an output collimator 93. The isolator main component 90 is provided with a central through hole 901, and the isolator main component 90 further includes: a collimator fastener 902, a first magnet array 903, a second magnet array 904, a conducting magnet 905, a Faraday optical rotation component 906, a casing 907, an upper cover 908, a lower cover 909, a fix screw 910, a magnetic field adjusting screw 911, a supporting layer 912. The Faraday optical rotation component 906 includes: a first beam splitter, a second beam splitter, a Faraday element, and a quartz rotator. The magnetic field adjusting module 91 includes: a magnetic field adjusting electric motor 921, a temperature sensor 922, a magnetic field control system 923, a signal line hole site 924.

The Faraday optical rotation component 906 is disposed in the central through hole 901. The collimator fastener 902 is disposed at two ends of the isolator main component 90, the input collimator 92 and the output collimator 93 are connected to the isolator main component 90 via the collimator fastener 902. The input collimator 92 imports the light beams of the laser device used; the light beams are deflected by the Faraday optical rotation component 905 and then output into the output collimator 93; the output collimator 93 couples the light beams, which have passed the input collimator 92 and the isolator main component 90, into the optical fibers, and finally output them to the next device.

The first magnet array 903 and the second magnet array 904 are in top-bottom symmetrical distributions about the central through hole 901; both the first magnet array 903 and the second magnet array 904 are classical Halbach magnet arrays, and both the first magnet array 903 and the second magnet array 904 include: the first magnet, the second magnet and the third magnet, a total of three magnets, which are arranged parallel to the central through hole.

The magnetic field direction of the first magnet of the first magnet array is upward, the magnetic field direction of the second magnet of the first magnet array is horizontally rightward, and the magnetic field direction of the third magnet of the first magnet array is horizontally downward; the magnetic field direction of the first magnet of the second magnet array is downward, the magnetic field direction of the second magnet of the second magnet array is horizontally rightward, and the magnetic field direction of the third magnet of the second magnet array is horizontally upward. The directions of the magnetic field of the first magnet array and the second magnet array to the Faraday optical rotation component in the central through hole are the same, all of which are towards the left.

A conducting magnet 905 is disposed at the upper part of the first magnet array 903, and another conducting magnet 905 is also disposed in the lower part of the second magnet array 904. Usually, the conducting magnet 905 and three magnets which have different directions are fixed by adhesives or external structure.

The casing 907, the upper cover 908, the lower cover 909 and the fix screw 910 fix the first magnet array 903 and the second magnet array 904 in the casing.

The magnetic field adjusting screw 911 is disposed above the casing, and it is capable to change the space between the first magnet array 903 and the second magnet array 904 via adjusting the magnetic field adjusting screw 911.

The supporting layer 912, which is configured to support the Faraday optical rotation component906, is disposed at the lower part of the central through hole 901 and connected to the casing 907. The Faraday optical rotation component 906 includes a first beam splitter and a second beam splitter, which are disposed at two ends of the Faraday element, respectively, and the quartz rotator is disposed between the Faraday element and the first beam splitter or the Faraday element and the second beam splitter.

The temperature sensor 922 is disposed in the supporting layer 912, and placed between the two magnet arrays and near the Faraday optical rotation component 906. The signal line hole site 924 is a channel disposed in the supporting layer 912, and the signal line of the temperature sensor 922 is connected to the magnetic field control system 923 via the signal line hole site 924. The magnetic field adjusting electric motor 921 is connected to the magnetic field adjusting screw 911, and in the case of inputting specific currents and pulses, the magnetic field adjusting electric motor 921 drives the magnetic field adjusting screw 911 to adjust to an appropriate magnetic field. The magnetic field control system 923 includes a microprocessor system and an electric motor driving system. Wherein, the electric motor driving system changes the angular displacement of the magnetic field adjusting electric motor 921 via inputting current pulses into the magnetic field adjusting electric motor 921; the electric motor driving system changes the rotating direction of the magnetic field adjusting electric motor 921 via adjusting the positive and negative directions of the current pulses. The microprocessor receives the signals detected by the temperature sensor 922; the microprocessor adopts the detected temperature value and compares it with the default best temperature value, then obtains feedback signals; the electric motor driving system adopts the feedback signal to adjust the amount and the positive and negative directions of the current pulses.

The electric motor driving system controls the magnetic field adjusting electric motor 921 to rotate counterclockwise, and the magnetic field adjusting screw presses magnets tightly, making the distance between the two magnets reduced, that is, the magnetic field strength increases. At that moment, the optical rotation angle of the Faraday element of the Faraday optical rotation component increases. On the contrary, the magnetic field adjusting electric motor 921 rotates clockwise, and the magnetic field adjusting screw 911 loosens magnets, increases the distance between the two magnets, that is, the magnetic field strength is decreased. At that moment, the optical rotation angle of the Faraday element of the Faraday optical rotation component 906 decreases.

The application also discloses an laser output head, including an optical isolator, the optical isolator may include an isolator main component and a magnetic field adjusting module, wherein the center of the isolator main component is provided with a central through hole; the isolator main component includes: at least a group of magnet array, a Faraday optical rotation component and a magnetic field adjusting screw disposed in the central through hole; the magnet array is disposed around the central through hole;

the magnetic field adjusting module includes: a magnetic field adjusting electric motor; the magnetic field adjusting screw is connected to the magnetic field adjusting electric motor and the magnet array, respectively, the magnetic field adjusting electric motor is configured to adjust magnetic field strength applied to the Faraday optical rotation component from the magnet array by changing the displacement of the magnetic field adjusting screw.

the magnet array comprises: a first magnet, a second magnet, and a third magnet which are arranged parallel to the central through hole;

a magnetic field direction of the first magnet is perpendicular to the central through hole;

a magnetic field direction of the second magnet is parallel to the central through hole;

a magnetic field direction of the third magnet is perpendicular to the central through hole and is opposite to the magnetic field direction of the first magnet.

The magnetic field adjusting module further comprises a magnetic field control system, the magnetic field control system is connected to the magnetic field adjusting electric motor and controls working status of the magnetic field adjusting electric motor;

the magnetic field control system comprises an electric motor driving system, microprocessor and a temperature sensor;

the electric motor driving system changes an angular displacement of the magnetic field adjusting electric motor by inputting current pulses to the magnetic field adjusting electric motor;

the electric motor driving system changes a rotation direction of the magnetic field adjusting electric motor by adjusting positive and negative directions of the current pulse;

the temperature sensor is disposed between the magnet arrays and is configured to convert temperature signals of the temperature around the Faraday optical rotation component and magnet arrays to electrical signals, and transmit the electrical signals to the magnetic field control system;

the microprocessor receives the signals detected by the temperature sensor;

the microprocessor uses the comparison of the detected temperature value and preset optimal temperature value to obtain a feedback signal;

the electric motor driving system uses the feedback signal to adjust the number and the positive and negative directions of the current pulses.

the magnetic field control system further comprises a coil;

the coil is disposed in the Faraday optical rotation component;

the coil is configured to provide auxiliary magnetic field for the Faraday optical rotation component.

The optical isolator further includes an input collimator and an output collimator connected to both ends of the isolator main component, respectively.

The optical isolator further includes an input collimator and a beam expansion system connected to two ends of the isolator main component, respectively.

The Faraday optical rotation component comprises: a first beam splitter, a second beam splitter, a Faraday element and a quartz rotator;

the first beam splitter and the second beam splitter are disposed at two ends of the Faraday element, respectively;

the quartz rotator are disposed between the Faraday element and the first beam splitter or the second beam splitter.

The Faraday optical rotation component further comprises: a first reflecting plate and a second reflecting plate disposed at two ends of the Faraday element, respectively;

the first reflecting plate and the second reflecting plate forms a reflective optical path.

The Faraday optical rotation component further comprises: a polarizer, a polarization analyzer and a Faraday element;

the polarizer and the polarization analyzer are disposed at two ends of the Faraday element, respectively.

The isolator main component further comprises: a conducting magnet;

the conducting magnet is connected to the magnet array;

the conducting magnet is configured to adjust magnetic direction and magnetic field strength of the position where the Faraday element is located.

The isolator main component further comprises: a supporting column;

the supporting column adjoins the central through hole, and the Faraday optical rotation component is disposed in the supporting column.

The temperature sensor is disposed in the supporting column.

The application further discloses a laser device, the laser device includes an optical isolator, the optical isolator may include: an isolator main component and a magnetic field adjusting module, wherein the center of the isolator main component is provided with a central through hole; the isolator main component includes: at least a group of magnet array, a Faraday optical rotation component and a magnetic field adjusting screw disposed in the central through hole; the magnet array is disposed around the central through hole, the magnetic field adjusting module includes: a magnetic field adjusting electric motor; the magnetic field adjusting screw is connected to the magnetic field adjusting electric motor and the magnet array, respectively, the magnetic field adjusting electric motor is configured to adjust magnetic field strength applied to the Faraday optical rotation component from the magnet array by changing the displacement of the magnetic field adjusting screw.

the magnet array comprises: a first magnet, a second magnet, and a third magnet which are arranged parallel to the central through hole;

a magnetic field direction of the first magnet is perpendicular to the central through hole;

a magnetic field direction of the second magnet is parallel to the central through hole;

a magnetic field direction of the third magnet is perpendicular to the central through hole and is opposite to the magnetic field direction of the first magnet.

the magnetic field adjusting module further comprises a magnetic field control system, the magnetic field control system is connected to the magnetic field adjusting electric motor and controls working status of the magnetic field adjusting electric motor;

the magnetic field control system comprises an electric motor driving system, microprocessor and a temperature sensor;

the electric motor driving system changes an angular displacement of the magnetic field adjusting electric motor by inputting current pulses to the magnetic field adjusting electric motor;

the electric motor driving system changes a rotation direction of the magnetic field adjusting electric motor by adjusting positive and negative directions of the current pulse;

the temperature sensor is disposed between the magnet arrays and is configured to convert temperature signals of the temperature around the Faraday optical rotation component and magnet arrays to electrical signals, and transmit the electrical signals to the magnetic field control system;

the microprocessor receives the signals detected by the temperature sensor;

the microprocessor uses the comparison of the detected temperature value and preset optimal temperature value to obtain a feedback signal;

the electric motor driving system uses the feedback signal to adjust the number and the positive and negative directions of the current pulses.

the magnetic field control system further comprises a coil;

the coil is disposed in the Faraday optical rotation component;

the coil is configured to provide auxiliary magnetic field for the Faraday optical rotation component.

The optical isolator further includes an input collimator and an output collimator connected to both ends of the isolator main component, respectively.

The optical isolator further includes an input collimator and a beam expansion system connected to two ends of the isolator main component, respectively.

The Faraday optical rotation component comprises: a first beam splitter, a second beam splitter, a Faraday element and a quartz rotator;

the first beam splitter and the second beam splitter are disposed at two ends of the Faraday element, respectively;

the quartz rotator are disposed between the Faraday element and the first beam splitter or the second beam splitter.

The Faraday optical rotation component further comprises: a first reflecting plate and a second reflecting plate disposed at two ends of the Faraday element, respectively;

the first reflecting plate and the second reflecting plate forms a reflective optical path.

The Faraday optical rotation component further comprises: a polarizer, a polarization analyzer and a Faraday element;

the polarizer and the polarization analyzer are disposed at two ends of the Faraday element, respectively.

The isolator main component further comprises: a conducting magnet;

the conducting magnet is connected to the magnet array;

the conducting magnet is configured to adjust magnetic direction and magnetic field strength of the position where the Faraday element is located.

The isolator main component further comprises: a supporting column;

the supporting column adjoins the central through hole, and the Faraday optical rotation component is disposed in the supporting column.

The temperature sensor is disposed in the supporting column.

It should be noted that for the embodiments of the method, in order to describe briefly, hence we expresses them as a series of action combinations. But the technical personnel in this field should be aware that the embodiment of the application are not limited by the sequence of actions described above, because according to the application, some steps are able to be carried on in other sequences or at the same time. Secondly, the technical personnel in this field should also be aware that all the embodiments described in this instructions are attributed to preferred embodiments, and the actions involved are not necessarily essential for the embodiment of the application.

The various embodiments in the specification have been explained step by step. Each of the embodiments has only emphasized the differences from others, and the same or similar parts between embodiments could be referred to each other.

It should be understood by those skilled in the art, embodiments of in the disclosure could be provided as method, device and computer program product. Therefore, the embodiments of in the disclosure may employ the forms of complete hardware embodiment, complete software embodiment or combination of hardware and software. Further, the embodiments of in the disclosure may employ the form of computer program product realizable on one or more of computer available recording medium (including but not limited to magnetic disk storage medium, compact disk-read only memory (CD-ROM) and optical storage medium, for example) containing computer available program codes.

The embodiments of in the disclosure has been described with reference to flow chart and/or block diagram of method, terminal device (system) and computer program product according thereto. It should be understood that each of and combination of steps and/or modules in flow charts and/or block diagrams could be realized by computer program instructions. The computer program instructions may be provided for a universal computer, a dedicated computer, an embedded processor or a processor of other programmable data processing terminal device to generate a machine, such that the instructions executed by the computer or the processor of other programmable data processing terminal device may form devices for realizing functions specified by one or more steps in the flow charts and/or one or more modules in the block diagrams.

The computer program instructions may also be stored in computer readable memory capable of booting the computer or other programmable data processing terminal device to run in a designated mode, such that the instructions stored in the computer readable memory may form a manufactured product containing instruction device. The instruction device may realize functions specified by one or more steps in the flow charts and/or one or more modules in the block diagrams.

The computer program instructions may also be loaded into the computer or other programmable data processing terminal device, such that the computer or other programmable terminal device may execute a series of operation steps to generate processing realizable by the computer, and in turn the instructions executed on the computer or other programmable terminal device may provide steps for realizing functions specified by one or more steps in the flow charts and/or one or more modules in the block diagrams.

Although preferred embodiments of the disclosure have been described, those skilled in the art may make additional amendments and modifications to the embodiments with substantial creative concept thereof. Therefore, the appended claims are intended to be constructed as encompassing the preferred embodiments and all the amendments and modifications falling into the scope of the embodiments of the disclosure.

In the end, it will be explained that, the terms "first", "second", etc. are only used herein to distinguish one element or operation from another element or operation, and does not necessarily require or suggest that there are any actual relationship or sequence between these elements or operations. Further, the terms "comprise", "include" and any other variants thereof are intended to cover a non-exclusive "comprise", so that process, method, product or terminal device which includes a series of elements may include not only those elements but also other elements that do not be definitely listed herein, or also may include inherent elements of the process, method, product or equipment. In the absence of more restrictions, an element defined by the statement "includes a..." is not meant to exclude other same elements in the process, method, product or equipment including this element.

The optical isolator, a laser output head and a laser device provided in the disclosure have been described in detail. Herein the principles and embodiments of the disclosure are illustrated by way of specific examples. The embodiments described above are only intended to help understand the method and main concept of the disclosure. Meanwhile, for an ordinary person skilled in the art, variations could be made to the specific embodiments and their application scope in accordance with the concept of the disclosure. In summary, the disclosure of the specification should not be construed as limiting of the disclosure.

**Claims**

1. An optical isolator, comprising an isolator main component (20) and a magnetic field adjusting module (21), wherein the center of the isolator main component (20) is provided with a central through hole (201); the isolator main component (20) includes: at least a group of magnet array (202), a Faraday optical rotation component (203) and a magnetic field adjusting screw (204) disposed in the central through hole (201); the magnet array (202) is disposed around the central through hole (201);
the magnetic field adjusting module (21) includes: a magnetic field adjusting electric motor (211); the magnetic field adjusting screw (204) is connected to the magnetic field adjusting electric motor (211) and the magnet array (202), respectively, the magnetic field adjusting electric motor (211) is configured to adjust magnetic field strength applied to the Faraday optical rotation component (203) from the magnet array (202) by changing the displacement of the magnetic field adjusting screw (204),
wherein the magnetic field adjusting module (21) further comprises a magnetic field control system, the magnetic field control system is connected to the magnetic field adjusting electric motor (211) and controls working status of the magnetic field adjusting electric motor (211);
wherein the magnetic field control system comprises an electric motor driving system, **characterized in that**
the electric motor driving system changes an angular displacement of the magnetic field adjusting electric motor (211) by inputting current pulses to the magnetic field adjusting electric motor (211);
the electric motor driving system changes a rotation direction of the magnetic field adjusting electric motor by adjusting positive and negative directions of the current pulse;
wherein the magnetic field control system further comprises: a microprocessor and a temperature sensor;
the temperature sensor is disposed between the magnet arrays (202) and is configured to convert temperature signals of the temperature around the Faraday optical rotation component (203) and the magnetic array (202) to electrical signals, and transmit the electrical signals to the magnetic field control system;
the microprocessor receives the signals detected by the temperature sensor;
the microprocessor uses the comparison of the detected temperature value and preset optimal temperature value to obtain a feedback signal;
the electric motor driving system uses the feedback signal to adjust the number and the positive and negative directions of the current pulses.

2. The optical isolator according to claim 1, wherein the magnet array comprises: a first magnet (301), a second magnet (302), and a third magnet (303) which are arranged parallel to the central through hole (201);
a magnetic field direction of the first magnet (301) is perpendicular to the central through hole (201);
a magnetic field direction of the second magnet (302) is parallel to the central through hole (201);
a magnetic field direction of the third magnet (303) is perpendicular to the central through hole (201) and is opposite to the magnetic field direction of the first magnet (301).

3. The optical isolator according to claim 1, further comprising: an input collimator (701) and an output collimator (702) connected to both ends of the isolator main component (20), respectively.

4. The optical isolator according to claim 1, further comprising: an input collimator (801) and a beam expansion system (81) connected to two ends of the isolator main component (20), respectively.

5. The optical isolator according to claim 1, wherein the magnetic field control system further comprises: a coil (601);

the coil (601) is disposed in the Faraday optical rotation component (203);

the coil (601) is configured to provide auxiliary magnetic field to the Faraday optical rotation component (203).

6. The optical isolator according to claim 1, wherein the Faraday optical rotation component (203) comprises: a first beam splitter (401), a second beam splitter (402), a Faraday element (403) and a quartz rotator (404);

the first beam splitter (401) and the second beam splitter (402) are disposed at two ends of the Faraday element (403), respectively;

the quartz rotator (404) are disposed between the Faraday element (403) and the first beam splitter (401) or the second beam splitter (402).

7. The optical isolator according to claim 6, wherein the Faraday optical rotation component (203) further comprises: a first reflecting plate (505) and a second reflecting plate (506) disposed at two ends of the Faraday element (503), respectively;

the first reflecting plate (505) and the second reflecting plate (506) forms a reflective optical path.

8. The optical isolator according to claim 1, wherein the Faraday optical rotation component (203) further comprises: a polarizer, a polarization analyzer and a Faraday element;

the polarizer and the polarization analyzer are disposed at two ends of the Faraday element, respectively.

9. The optical isolator according to claim 6, 7 or 8, wherein the isolator main component (20) further comprises: a conducting magnet;

the conducting magnet is connected to the magnet array (202); the conducting magnet is configured to adjust magnetic direction and magnetic field strength of the position where the Faraday element is located.

10. The optical isolator according to claim 1, wherein the isolator main component (20) further comprises: a supporting column;

the supporting column adjoins the central through hole (201), and the Faraday optical rotation component (21) is disposed in the supporting column.

11. The optical isolator according to claim 1, wherein the temperature sensor is disposed in the supporting column.

12. A laser output head, comprising the optical isolator according to any one of claims 1-11.

13. A laser device, comprising the optical isolator according to any one of claims 1-11.

## Patentansprüche

1. Optischer Isolator, umfassen eine Isolator-Hauptkomponente (20) und ein Magnetfeld-Einstellmodul (21), wobei der mittige Bereich der Isolator-Hauptkomponente (20) mit einem mittigen Durchgangsloch (201) bereitgestellt ist; wobei die Isolator-Hauptkomponente (20) Foglendes einschließt: wenigstens eine Gruppe von Magnetanordnungen (202), eine optische Faraday-Drehkomponente (203) und eine Magnetfeld-Einstellschraube (204), die in dem mittigen Durchgangsloch (201) angeordnet sind; wobei die Magnetanordnung (202) um das mittige Durchgangsloch (201) herum angeordnet ist;

wobei das Magnetfeld-Einstellmodul (21) Folgendes einschließt: einen Magnetfeld-Einstellelektromotor (211); wobei die Magnetfeld-Einstellschraube (204) mit dem Magnetfeld-Einstellelektromotor (211) bzw. der Magnetanordnung (202) verbunden ist, wobei der Magnetfeld-Einstellelektromotor (211) konfiguriert ist, um die an die optische Faraday-Drehkomponente (203) angelegte Magnetfeldstärke von der Magnetanordnung (202) durch Ändern der Verschiebung der Magnetfeld-Einstellschraube (204) einzustellen,

wobei das Magnetfeld-Einstellmodul (21) ferner ein Magnetfeldsteuersystem umfasst, wobei das Magnetfeldsteuersystem mit dem Magnetfeld-Einstellelektromotor (211) verbunden ist und den Arbeitsstatus des Magnetfeld-Einstellelektromotors (211) steuert;

wobei das Magnetfeldsteuersystem ein Elektromotor-Antriebssystem umfasst, **dadurch gekennzeichnet, dass**

das Elektromotor-Antriebssystem eine Winkelverschiebung des Magnetfeld-Einstellelektromotors (211) durch Eingeben von Stromimpulsen an den Magnetfeld-Einstellelektromotor (211) ändert;

wobei das Elektromotor-Antriebssystem eine Drehrichtung des Magnetfeld-Einstellelektromotors durch Einstellen der positiven und negativen Richtungen des Stromimpulses ändert;

wobei das Magnetfeldsteuersystem ferner Folgendes umfasst: einen Mikroprozessor und einen Temperatursensor;

wobei der Temperatursensor zwischen den Magnetanordnungen (202) angeordnet und konfiguriert ist, um Temperatursignale der Temperatur um die optische Faraday-Drehkomponente (203) und die magnetische Anordnung (202) in elektrische Signale umzuwandeln und die elektrischen Signale an das Magnetfeldsteuersystem zu übertragen;

wobei der Mikroprozessor die von dem Temperatursensor erfassten Signale empfängt;

wobei der Mikroprozessor den Vergleich des erfassten Temperaturwertes und des vorab eingestellten optimalen Temperaturwertes verwendet, um ein Rückkopplungssignal zu erhalten;
wobei das Elektromotor-Antriebssystem das Rückkopplungssignal verwendet, um die Anzahl und die positiven und negativen Richtungen der Stromimpulse einzustellen.

2. Optischer Isolator nach Anspruch 1, wobei die Magnetanordnung Folgendes umfasst:

    einen ersten Magneten (301), einen zweiten Magneten (302) und einen dritten Magneten (303), die parallel zu dem mittigen Durchgangsloch (201) angeordnet sind;
    wobei eine Magnetfeldrichtung des ersten Magneten (301) senkrecht zu dem zentralen Durchgangsloch (201) verläuft;
    wobei eine Magnetfeldrichtung des zweiten Magneten (302) parallel zu dem mittigen Durchgangsloch (201) verläuft;
    wobei eine Magnetfeldrichtung des dritten Magneten (303) senkrecht zu dem mittigen Durchgangsloch (201) und entgegengesetzt zu der Magnetfeldrichtung des ersten Magneten (301) verläuft.

3. Optischer Isolator nach Anspruch 1, ferner umfassend: einen Eingangskollimator (701) und einen Ausgangskollimator (702), die jeweils mit beiden Enden der Isolator-Hauptkomponente (20) verbunden sind.

4. Optischer Isolator nach Anspruch 1, ferner umfassend: einen Eingangskollimator (801) und ein Strahlaufweitungssystem (81), die jeweils mit zwei Enden der Isolator-Hauptkomponente (20) verbunden sind.

5. Optischer Isolator nach Anspruch 1, wobei das Magnetfeldsteuersystem ferner Folgendes umfasst: eine Spule (601);
wobei die Spule (601) in der optischen Faraday-Drehkomponente (203) angeordnet ist;
wobei die Spule (601) konfiguriert ist, um ein Hilfsmagnetfeld für die optische Faraday-Rotationskomponente (203) bereitzustellen.

6. Optischer Isolator nach Anspruch 1, wobei die optische Faraday-Drehkomponente (203) Folgendes umfasst: einen ersten Strahlteiler (401), einen zweiten Strahlteiler (402), ein Faraday-Element (403) und einen Quarzrotator (404);
wobei der erste Strahlteiler (401) und der zweite Strahlteiler (402) jeweils an zwei Enden des Faraday-Elementes (403) angeordnet sind;
wobei der Quarzrotator (404) zwischen dem Faraday-Element (403) und dem ersten Strahlteiler (401) oder dem zweiten Strahlteiler (402) angeordnet ist.

7. Optischer Isolator nach Anspruch 6, wobei die optische Faraday-Drehkomponente (203) ferner Folgendes umfasst: eine erste reflektierende Platte (505) und eine zweite reflektierende Platte (506), die jeweils an zwei Enden des Faraday-Elementes (503) angeordnet sind;
wobei die erste reflektierende Platte (505) und die zweite reflektierende Platte (506) einen reflektierenden optischen Pfad bilden.

8. Optischer Isolator nach Anspruch 1, wobei die optische Faraday-Rotationskomponente (203) ferner Folgendes umfasst: einen Polarisator, einen Polarisations-Analysator und ein Faraday-Element;
wobei der Polarisator und der Polarisations-Analysator jeweils an zwei Enden des Faraday-Elements angeordnet sind.

9. Optischer Isolator nach Anspruch 6, 7 oder 8, wobei die Isolator-Hauptkomponente (20) ferner Folgendes umfasst: einen leitenden Magneten;
wobei der leitende Magnet mit der Magnetanordnung (202) verbunden ist; wobei der leitende Magnet konfiguriert ist, um die magnetische Richtung und die magnetische Feldstärke der Position einzustellen, an der sich das Faraday-Element befindet.

10. Optischer Isolator nach Anspruch 1, wobei die Isolator-Hauptkomponente (20) ferner Folgendes umfasst: eine Tragsäule;
wobei die Tragsäule an das mittige Durchgangsloch (201) angrenzt, und die optische Faraday-Drehkomponente (21) in der Tragsäule angeordnet ist.

11. Optischer Isolator nach Anspruch 1, wobei der Temperatursensor in der Tragsäule angeordnet ist.

12. Laserausgangskopf, umfassend den optischen Isolator nach einem beliebigen der Ansprüche 1 bis 11.

13. Laservorrichtung, umfassend den optischen Isolator nach einem beliebigen der Ansprüche 1 bis 11.

**Revendications**

1. Isolateur optique comprenant un composant principal d'isolateur (20) et un module de réglage de champ magnétique (21), dans lequel le centre du composant principal d'isolateur (20) est pourvu d'un trou traversant central (201) ; le composant principal d'isolateur (20) comprend :

    au moins un groupe de réseau d'aimants (202), un composant de rotation optique de Faraday (203) et une vis de réglage de champ magnétique (204) disposée dans le trou traversant central (201) ; le réseau d'aimants (202) est disposé autour du trou traversant central (201) ;

le module de réglage de champ magnétique (21) comprend : un moteur électrique de réglage de champ magnétique (211) ; la vis de réglage de champ magnétique (204) est connectée au moteur électrique de réglage de champ magnétique (211) et au réseau d'aimants (202), respectivement, le moteur électrique de réglage de champ magnétique (211) est configuré pour régler l'intensité du champ magnétique appliqué au composant de rotation optique de Faraday (203) issu du réseau d'aimants (202) en modifiant le déplacement de la vis de réglage de champ magnétique (204),

dans lequel le module de réglage de champ magnétique (21) comprend en outre un système de commande de champ magnétique, le système de commande de champ magnétique est connecté au moteur électrique de réglage de champ magnétique (211) et contrôle l'état de fonctionnement du moteur électrique de réglage de champ magnétique (211) ;

dans lequel le système de commande de champ magnétique comprend un système d'entraînement du moteur électrique, **caractérisé en ce que**

le système d'entraînement du moteur électrique modifie un déplacement angulaire du moteur électrique de réglage de champ magnétique (211) en introduisant des impulsions de courant dans le moteur électrique de réglage de champ magnétique (211) ;

le système d'entraînement du moteur électrique modifie le sens de rotation du moteur électrique de réglage de champ magnétique en ajustant les directions positive et négative de l'impulsion de courant ;

dans lequel le système de commande de champ magnétique comprend en outre : un microprocesseur et un capteur de température ;

le capteur de température est disposé entre les réseaux d'aimants (202) et est configuré pour convertir les signaux de température de la température autour du composant de rotation optique de Faraday (203) et du réseau magnétique (202) en signaux électriques et pour transmettre les signaux électriques au système de commande de champ magnétique ;

le microprocesseur reçoit les signaux détectés par le capteur de température ;

le microprocesseur utilise la comparaison de la valeur de température détectée et de la valeur de température optimale prédéfinie pour obtenir un signal de retour ;

le système d'entraînement du moteur électrique utilise le signal de retour pour ajuster le nombre et les directions positive et négative des impulsions de courant.

2. Isolateur optique selon la revendication 1, dans lequel le réseau d'aimants comprend : un premier aimant (301), un deuxième aimant (302) et un troisième aimant (303) qui sont disposés parallèlement au trou traversant central (201) ;

une direction de champ magnétique du premier aimant (301) est perpendiculaire au trou traversant central (201) ;

une direction de champ magnétique du deuxième aimant (302) est parallèle au trou traversant central (201) ;

une direction de champ magnétique du troisième aimant (303) est perpendiculaire au trou traversant central (201) et est opposée à la direction de champ magnétique du premier aimant (301).

3. Isolateur optique selon la revendication 1, comprenant en outre: un collimateur d'entrée (701) et un collimateur de sortie (702) connectés aux deux extrémités du composant principal d'isolateur (20), respectivement.

4. Isolateur optique selon la revendication 1, comprenant en outre: un collimateur d'entrée (801) et un système d'extension de faisceau (81) connectés aux deux extrémités du composant principal d'isolateur (20), respectivement.

5. Isolateur optique selon la revendication 1, dans lequel le système de commande de champ magnétique comprend en outre : une bobine (601) ;

la bobine (601) est disposée dans le composant de rotation optique de Faraday (203) ;

la bobine (601) est configurée pour fournir un champ magnétique auxiliaire au composant de rotation optique de Faraday (203).

6. Isolateur optique selon la revendication 1, dans lequel le composant de rotation optique de Faraday (203) comprend : un premier séparateur de faisceau (401), un second séparateur de faisceau (402), un élément de Faraday (403) et un rotateur à quartz (404) ;

le premier séparateur de faisceau (401) et le second séparateur de faisceau (402) sont disposés à deux extrémités de l'élément de Faraday (403), respectivement ;

le rotateur à quartz (404) est disposé entre l'élément de Faraday (403) et le premier séparateur de faisceau (401) ou le second séparateur de faisceau (402).

7. Isolateur optique selon la revendication 6, dans lequel le composant de rotation optique de Faraday (203) comprend en outre : une première plaque réfléchissante (505) et une seconde plaque réfléchissante (506) disposées aux deux extrémités de l'élément de Faraday (503), respectivement ;

la première plaque réfléchissante (505) et la seconde plaque réfléchissante (506) forment un chemin optique réfléchissant.

8. Isolateur optique selon la revendication 1, dans lequel le composant de rotation optique de Faraday (203) comprend en outre : un polariseur, un analyseur de polarisation et un élément de Faraday ; le polariseur et l'analyseur de polarisation sont disposés aux deux extrémités de l'élément de Faraday, respectivement.

9. Isolateur optique selon la revendication 6, 7 ou 8, dans lequel le composant principal d'isolateur (20) comprend en outre : un aimant conducteur ; l'aimant conducteur est connecté au réseau d'aimants (202) ; l'aimant conducteur est configuré pour régler la direction magnétique et l'intensité du champ magnétique de la position où se trouve l'élément de Faraday.

10. Isolateur optique selon la revendication 1, dans lequel le composant principal d'isolateur (20) comprend en outre : une colonne de support ; la colonne de support est adjacente au trou traversant central (201) et le composant de rotation optique de Faraday (21) est disposé dans la colonne de support.

11. Isolateur optique selon la revendication 1, dans lequel le capteur de température est disposé dans la colonne de support.

12. Tête de sortie laser, comprenant l'isolateur optique selon l'une quelconque des revendications 1 à 11.

13. Dispositif à laser, comprenant l'isolateur optique selon l'une quelconque des revendications 1 à 11.

FIG. 1

FIG. 2

30

302

301

303

313

311

31

312

FIG. 3

401

403

404

402

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510477746
- JP S59181319 A

- JP H0862646 A